# EUROPEAN PATENT SPECIFICATION

(11) **EP 3 280 907 B1**
(45) Date of publication and mention of the grant of the patent: **26.05.2021**
(21) Application number: 14908329.7
(22) Date of filing: 20.12.2014
(51) Int. Cl.: F03B 13/18, E02B 9/08

(54) **WAVE ENERGY CONVERSION APPARATUS AND METHOD FOR MANUFACTURING THE SAME**
WELLENENERGIEUMWANDLER UND VERFAHREN ZUR HERSTELLUNG DAVON
APPAREIL DE CONVERSION DE L'ÉNERGIE DES VAGUES ET PROCÉDÉ DE FABRICATION DE CELUI-CI

(43) Date of publication of application: 14.02.2018
(60) Divisional application: 20197719.6
(73) Proprietor: AW-Energy Oy, 01380 Tikkurila (FI)
(72) Inventor: JÄRVINEN, Arvo, FI-01230 Vantaa (FI); VUORINEN, Matti, FI-02210 Espoo (FI); RIDGEWELL, Christopher, FI-00170 Helsinki (FI); MUCHA, Tomasz, FI-02760 Espoo (FI); BERG, Markus, FI-00780 Helsinki (FI)
(74) Representative: Salomäki, Juha Kari Ensio
(86) International application number: PCT/FI2014/051033
(87) International publication number: WO 2016/097464

(56) References cited:
- WO-A1-2007/125156
- WO-A1-2007/125156
- WO-A1-2014/162037
- WO-A1-2014/162037
- WO-A1-2014/162038
- WO-A1-2014/162038
- JP-U- S 599 176
- KR-A- 20130 066 884
- KR-A- 20130 066 884

## Description

The present invention relates to a wave energy conversion apparatus as defined in the preamble of claim 1.

The wave energy conversion apparatus according to the invention is intended to be used in shallow water and is suited very well for instance to be used in connection with a panel or flap or essentially plate-like wing element, later called shorter only as a fin connected pivotally to a base foundation anchored to the sea bed to make oscillating motion backwards and forwards about the vertical in response to wave motion acting on faces of the fin. The wave energy or tidal energy collected is further converted for instance to electric energy. For the sake of simplicity, only the term wave energy is later mentioned when both the wave energy and the tidal energy of seawater are meant.

According to prior art there are various types of wave energy conversion systems where the arrangements include a base and, for instance, one or more fins pivotally connected to the base to make a reciprocating or oscillating movement about a rotation axis or pivot axis in response to wave forces or tidal forces. The oscillating movement is then converted for example to electric energy with the help of a power-take-off (PTO) unit equipped with a power-take-off (PTO) machinery comprising a generator or alike, and/or to production of desalinated water from seawater with the help of RO or flash technology or alike

Relevant prior art is disclosed in documents JP S599176U, WO 2014/162038, WO 2007/125156, WO 2014/162037 and KR 20130066884.

One type of a prior art wave energy conversion system is shown in US patent No. US7834474 B2 based on the British priority application filed in the year 2005. This publication shows a wave energy conversion system where the apparatus is arranged so that when the base portion is anchored to the bed of a body of water with the fin portion facing the wave motion, the base portion and the fin portion extend vertically through at least the entire depth of the water, to present a substantially continuous surface to the wave motion throughout the full depth of water from the wave crest to the sea bed. In addition the fin portion is sufficiently buoyant in water so as to be biased to the vertical in use, and the fin portion also is provided with chambers, which contain air, gas or foam so that the buoyancy of the fin portion is adjustable by filling at least one of the chambers with water.

Another prior art wave energy conversion system, where the apparatus is arranged so that when the base portion is anchored to the bed of a body of water with the fin or flap portion facing the wave motion, the base portion and the fin or flap portion extend vertically through at least the entire depth of the water, to present a substantially continuous surface to the wave motion throughout the full depth of water from the wave crest to the sea bed, is shown in US patent No. US4371788 that has been published already more than 22 years before the priority application of the US patent No. US7834474 B2 mentioned above was filed.

A problem with the arrangement according to the US patent No. US7834474 B2 mentioned above and in general also with other prior art arrangements is a difficulty to produce a fin or flap whose buoyancy, forms and size is as optimized as possible to maximize the wave energy capture just in those particular sea conditions prevailing in the installation site of the wave energy conversion arrangement.

Another problem with both the solutions of the US patents mentioned above is the fact that the upper part of the fin or flap extends through the surface of the water. In that case great indefinite forces are directed towards the structure of the conversion apparatus when the upper part of the fin or flap that has been above the surface of the water hits the water surface. These forces cause for instance different vibrations to the conversion apparatus. For that reason, the conversion apparatuses according to prior art have to be dimensioned bigger and stronger, which causes among other things additional costs.

The object of the present invention is to eliminate the drawbacks described above and to achieve a reliable, compact, economical and efficient wave energy conversion apparatus in order to be able to capture a maximum amount of available wave or tidal energy particularly at the site where the apparatus is installed. Another object of the present invention is to achieve a wave energy conversion apparatus that is easy to configure to capture a maximum amount of available wave or tidal energy particularly at the site where the apparatus is installed. Yet, another object of the present invention is to achieve a wave energy conversion apparatus where the upper part of the fin is interchangeable. Yet, another object of the present invention is to achieve a wave energy conversion apparatus where the upper part of the fin is flexible and advantageously equipped with piezoelectric arrangement to generate electricity when the upper part of the fin is bending caused by wave forces. And yet, another object of the present invention is to achieve a wave energy conversion apparatus where the effect of the waves is strengthened with moving auxiliary fins on the side and/or upper edges of the fin. The wave energy conversion apparatus according to the invention is characterized by what is presented in the characterization part of claim 1. Other embodiments of the invention are characterized by what is presented in the other claims.

The solution of the invention has the advantage that thanks to the precisely focused planning and design energy capturing and capacity of the wave energy conversion apparatus are extremely high. That means a high power level and higher energy production than with prior art devices. One advantage is also the precisely dimensioned size of the apparatus and its components, which leads to a smaller construction and a cost-effective structure. Thus, no over-measured structure is needed and the need for maintenance is reduced.

In the following, the invention will be described in detail by the aid of examples by referring to the attached simplified and diagrammatic drawings, wherein
- Fig. 1: presents a simplified oblique top view of a wave energy conversion apparatus,
- Fig. 2: presents in a side view, partially cross-sectioned and in a simplified and diagrammatic way a wave energy conversion apparatus,

- Fig. 3: presents a simplified oblique top view of a wave energy conversion apparatus according to Fig. 1 and partially cross-sectioned,
- Fig. 4: presents a simplified top view of a cross-sectioned part of the body of the fin of an energy conversion apparatus,

- Fig. 5: presents in a front view, and in a simplified and diagrammatic way another type of the fin of wave energy conversion apparatus,

- Fig. 6: presents in a side view, cross-sectioned and in a simplified and diagrammatic way the fin according to Fig. 5,
- Fig. 7: presents in a side view and in a simplified and diagrammatic way a fin according to the invention equipped with auxiliary side wings at the upper edge of the fin in the first position,
- Fig. 8: presents in a side view and in a simplified and diagrammatic way the fin according to Fig. 7 in the second position,
- Fig. 9: presents in a front view seen in direction of an arrow C in Fig. 7, and in a simplified and diagrammatic way yet another fin according to the invention equipped with auxiliary side wings at the upper edge of the fin and at the side edges of the fin in the first position, and
- Fig. 10: presents in a front view seen in direction of an arrow C in Fig. 8, and in a simplified and diagrammatic way the fin according to Fig. 9 in the second position.

The basic idea of the present invention is to achieve a of wave energy conversion apparatus where all the components, their locations, sizes and forms are planned, designed and dimensioned beforehand taking local sea conditions into consideration already in the planning and designing phase. The wave energy conversion apparatus according to the invention is a further development of the solution shown in the applicant's own US patent No. US7131269 B2 that is based on the international patent publication No. WO03/036081 A1, published on 1.5.2003, and originated from the Finnish patent application filed as early as in the year 2001. This patent publication presents a process and an apparatus for utilizing wave energy comprising for instance a compression cylinder acting as an energy reserve, a plate-like body pivotally attached to a base at the bottom, and a compression cylinder piston connected to the plate-like body. The plate-like body is rotatably attached at its lower edge to the base. And at the top part of the plate-like body, there is a float having a weight less than the specific weight of water. The float mentioned above makes the plate-like body, or the flap portion sufficiently buoyant in water so as to be biased to the vertical in use.

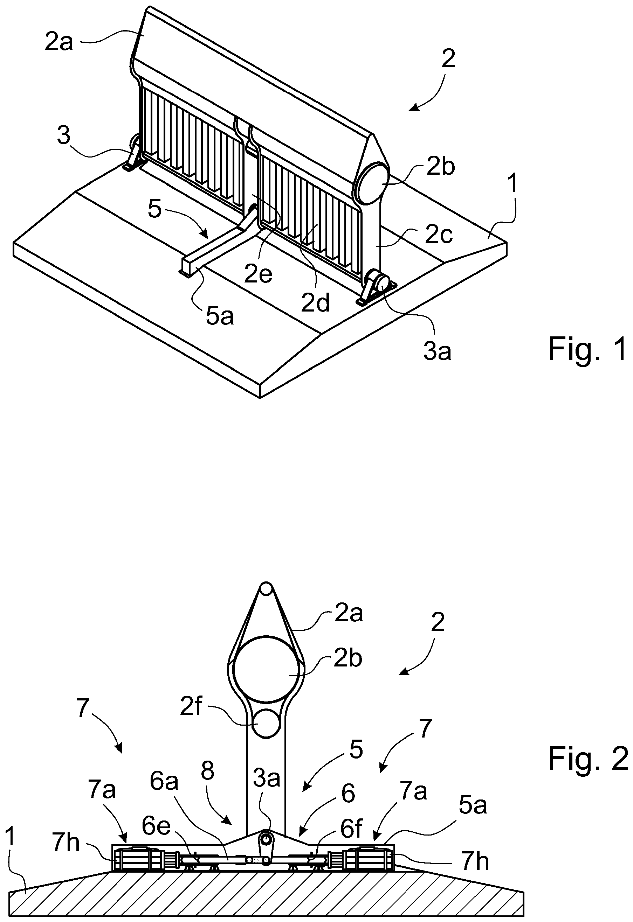

Figs. 1 and 2 present a wave energy conversion apparatus in two different views. The wave energy conversion apparatus comprises at least a base 1, a fin 2 reciprocating about its pivot shaft 3a, a driving and power-take-off (PTO) arrangement 5 having an actuating mechanism 6 and one or more hydraulic PTO units 7. The actuating mechanism 6 is arranged to transfer a reciprocating motion of the fin 2 mechanically to a linear motion of hydraulic pistons in hydraulic cylinders that act in this embodiment of the invention as a part of the hydraulic power transmission mechanism of the PTO units 7.

The reciprocating fin 2 oscillates on the base 1 back and forth with the movement of seawater for recovering kinetic energy like wave energy of seawater. The fin 2 comprises for example two parallel halves with a vertical gap 2e extending upwards from the lower edge of the fin 2 in the middle of the fin 2 between the two halves of the fin 2. The upper part of the fin 2 is unbroken without the gap 2e. At the production site the base 1 is mounted onto the bottom of the sea. On the base 1 there are advantageously two or possibly more supporting legs 3 that are fastened onto the base 1 so that at least one supporting leg 3 is situated at each side of the fin 2. At its upper end each supporting leg 3 supports an essentially horizontal, back and forth rotating pivot shaft 3a on which the two halves of the fin 2 are mounted at their lower edges so that the fin 2 can make a reciprocating motion along the movement of the seawater, for instance along the movement of waves. The pivot shaft 3a can be a common shaft reaching from the first end of the fin 2 to the second end of the fin 2, or it can also be formed from several separate parts, for instance from three separate parts so that one part is at each outer side of the fin 2 and one common shaft part to both the halves of the fin 2 is horizontally in the middle of the fin 2. The fin 2 and the pivot shaft 3a rotate back and forth together simultaneously and at the same speed of rotation.

The driving and PTO arrangement 5 has been placed into the gap 2e of the two lower halves of the fin 2 and fastened onto the base 1. The driving and PTO arrangement 5 is situated symmetrically in relation to the pivot shaft 3a of the fin 2 in the direction of the width of the fin 2, and also in the direction of the reciprocating motion of the fin 2. In that kind of an arrangement there are one or more mutually symmetrically placed PTO units 7 at either side of the fin 2 in the direction of the reciprocating motion of the fin 2. Equally, the PTO units 7 can also be placed in many other ways. For instance, all the PTO units 7 can be situated at the same side of the fin 2 in the direction of the reciprocating motion of the fin 2. Then the PTO units 7 can be situated either parallel to each other or one upon the other. The driving and PTO arrangement 5 is protected with a sealed protection cover 5a against seawater.

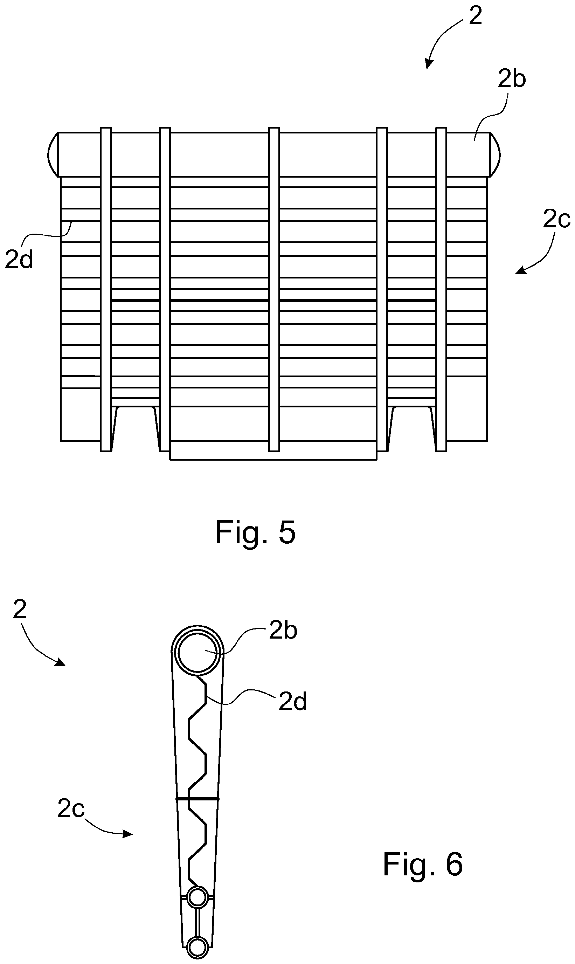

In case of only one PTO unit 7 or when all the PTO units 7 are situated at the same side of the fin 2, the gap 2e is not needed and therefore the body 2c of the fin 2 can be unbroken without the gap 2e. This kind of a fin 2 is illustrated for example in Figs. 5-10.

The actuating mechanism 6 having a rectilinear actuating rod 6a is connected about its middle part through a lever mechanism 8 to a lower part of the fin 2 and arranged to make reciprocating linear motion together with the fin 2. The actuating rod 6a has two ends that act as the first pusher end 6e and the second pusher end 6f. The pusher ends 6e, 6f are free ends so that they are not fastened or otherwise anchored or fixed to any other part of the arrangement. The pusher ends 6e, 6f are only arranged to push the power transmission mechanism of the PTO units 7 in turns so that when the first pusher end 6e is pushing the power transmission mechanism of the first PTO unit 7 the second pusher end 6f is returning from pushing the power transmission mechanism of the second PTO unit 7. The power transmission mechanism of the PTO units 7 in this embodiment is a group of pistons in a group 7a of hydraulic cylinders 7h. By this way the actuating mechanism 6 is arranged to transfer the reciprocating motion of the fin 2 mechanically to the linear motion of the pistons of the hydraulic PTO units 7 of this example embodiment.

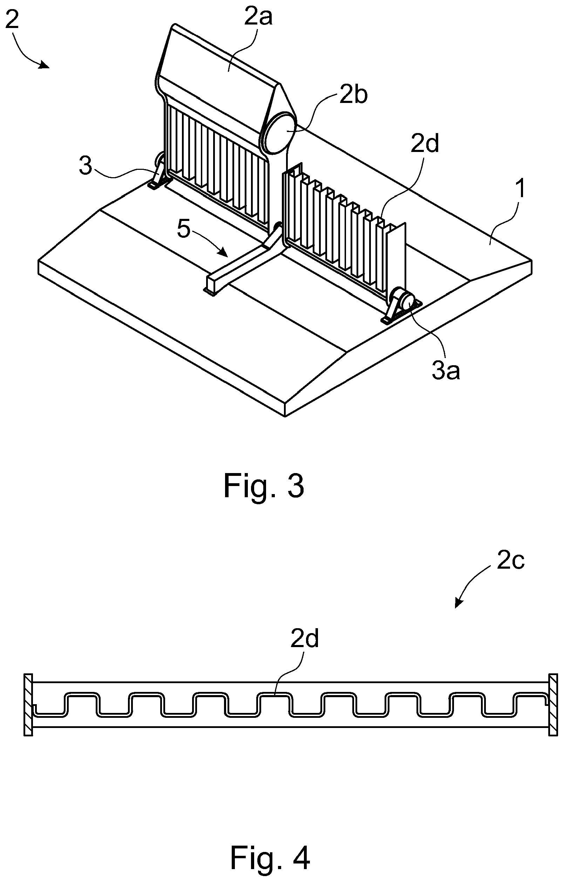

The fin 2 comprises among other things an interchangeable upper part 2a, a float part 2b or pontoon part to cause buoyant force, and a fin body 2c supporting the upper part 2a and the float part 2b. The fin 2 is mounted on the pivot shaft 3a at the lower edge of the fin body 2c. Advantageously the fin body 2c comprises a corrugated plate or plates to form a wall part 2d or barrier that blocks water passing through the fin 2. The corrugated form is stronger than the flat form, and therefore the structure of the wall part 2d can be lighter than the corresponding part in prior art arrangements. In the embodiments of Figs. 1-4 the direction of the corrugations is vertical extending from the lower part of the fin body 2c to the upper part of the fin body 2c. Correspondingly in the embodiments of Figs. 5 and 6 the direction of the corrugations is horizontal extending from the first side edge of the fin body 2c to the second side edge of the fin body 2c. The length of the horizontal corrugations can also be shorter than mentioned above.

The interchangeable upper part 2a can be made to extend to various heights above the float part 2b. In case the water height is lower than supposed the existing upper part 2a can be replaced by a lower upper part 2a, or in case the water height is greater than supposed the existing upper part 2a can be replaced by a higher upper part 2a. The form of the interchangeable upper part 2a can also be varied.

In addition, the upper part 2a is advantageously made of flexible material, and is arranged to yield appropriately if something, for instance a keel of a ship or boat, hits the upper part 2a. Further the flexible upper part 2a of the fin 2 is advantageously equipped with piezoelectric means and conducting means to generate electric energy when the flexible upper part 2a slightly bends by the force of the waves and to conduct the generated electric energy to the fin body 2c and to other metallic components to prevent corrosion.

The float part 2b is a hollow pontoon whose size, location and buoyancy are precisely dimensioned during the planning and designing phase. Initial values for the design are the prevailing sea conditions at the installation site. Advantageously the float part 2b is filled with gas, such like air but also other gas can be used, for instance gas that prevents corrosion. Also, various foams, lighter than water, can be used as a filling medium.

The fin 2 comprises also one or more auxiliary compartments 2f in order to adjust the buoyancy of the fin 2. Preferably the auxiliary compartments 2f are situated in the vicinity of the float part 2. When needed the buoyancy of the fin 2 is adjusted by filling one or more auxiliary compartment 2f with material heavier than the filling material in the float part 2b, for example with water or sand. In case of the presented embodiment the auxiliary compartment 2f is below the float part 2b, but as well it can be above the float part 2b or at its sides.

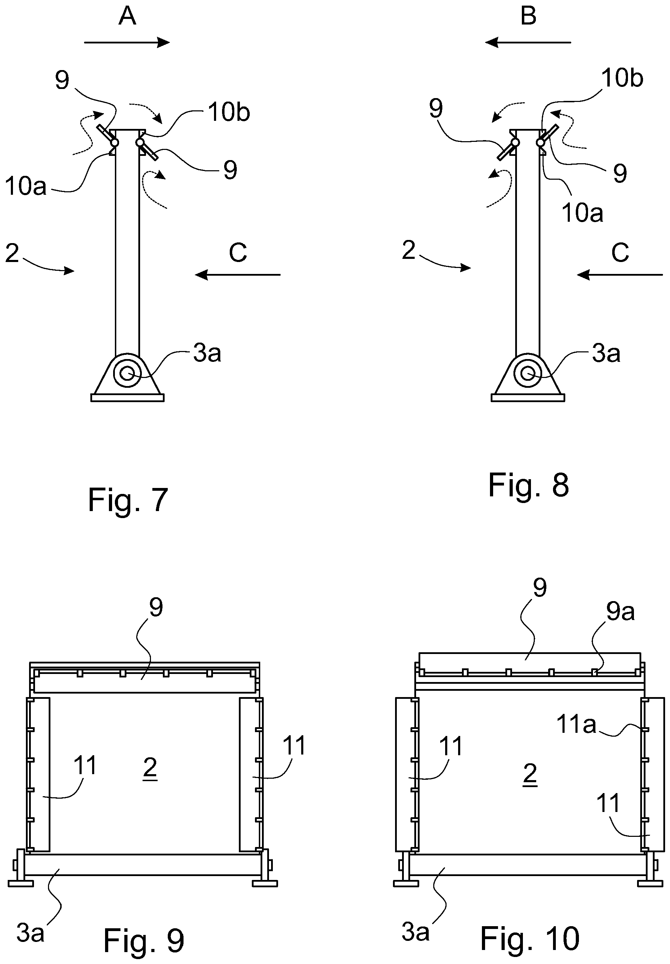

Figs. 7-10 present a fin according to the invention. Though the upper part 2a and the float part 2b are not visible in the figures they are, however, not necessarily excluded from the actual solution. In Figs. 7 and 8 the fin 2 is equipped with auxiliary side wings 9 at the upper edge of the fin 2. The side wings 9 are hinged at their first end at the upper edge of the fin 2 with a hinge arrangement 9a so that the side wings 9 can rotate freely around the hinge axis from the first end position to the second end position and vice versa. The second end of the side wings 9 is free to move. The first end position comprises a first stopper 10a to stop the motion of the side wing towards the first end position and the second end position comprises a second stopper 10b to stop the motion of the side wing towards the second end position. In this way the side wings 9 are arranged to rotate by the force caused by the waves when the flow of the waves hits the front surface of the fin 2.

In Fig. 7 the flow of the waves is directed in the direction of an arrow A and In Fig. 8 the flow of the waves is directed to the opposite direction in the direction of an arrow B. When the fin 2 is rotating in the direction of the flow of the waves the first side wing 9 that is in the same side of the fin 2 where the waves are coming from is rotating upwards towards the second stopper 10b pressed by the pressure of the waves. At the same time the second side wing 9 in the opposite side of the fin 2 is rotating downwards towards the first stopper 10a pressed by the counter pressure of the waves just in front of the fin 2. The arrows around the top part of the fin 2 describe the flow of the water around the side wings 9. Fig. 8 illustrates the situation where the flow of the water is opposite. The side wings 9 enlarge the surface of the fin 2 and at the same time make more obstacles against the flow of water in the side where the flow comes from, and also reduce the obstacle on the opposite side. As a consequence, the efficiency of the energy capture is increasing.

In the solutions of Figs. 9 and 10 the fin 2 is equipped in addition to the auxiliary side wings 9 at the upper edge of the fin 2, also with auxiliary side wings 11 at both the side edges of the fin 2. The side wings 11 are hinged at their first end at the side edge of the fin 2 with a hinge arrangement 11a similarly like side wings 9, so that the side wings 11 can rotate freely around the hinge axis from the first end position to the second end position and vice versa. The second end of the side wings 11 is free to move, and the stopper means correspond the stoppers 10a and 10b of the side wings 9. The side wings 11 increase the efficiency of the wave energy conversion apparatus.

The auxiliary side wings 9 and 11 are arranged to rotate automatically along with the effect of the flow of water and they can rotate between 0-90 degrees, suitably about 40-50 degrees and advantageously about 45 degrees inwards or outwards in relation to the fin 2.

Advantageously the fin 2 together with the base 1 is constructed so that when the base 1 is anchored to the sea bed with the fin 2 facing the wave motion, the fin 2 extends on the low tide vertically from the base 1 through the entire depth of water, and on the high tide the vertical extension of the fin 2 is smaller than the entire depth of water. So, on the high tide and during the mean water level the upper edge of the fin 2 is always under the water surface, and on the low tide the upper edge of the fin 2 reaches just to the water surface but never or hardly ever penetrates the water surface. However, in locations where the height difference between the low tide and the high tide is relatively large, for instance several meters, the fin 2 extends on the mean water level vertically from the base 1 through the entire depth of water, and on the high tide the vertical extension of the fin 2 is again smaller than the entire depth of water. Now only on the low tide the upper edge of the fin 2 penetrates the water surface.

The wave energy conversion apparatus according to the invention and particularly structure of the fin 2 is planned, designed, and dimensioned beforehand to be as efficient as possible exactly at its own installation site. Thus, planning takes all the special sea states or conditions of the installation site into consideration, and the apparatus with its components is dimensioned as precisely as possible just for the sea conditions at that particular installation site.

It is obvious to the person skilled in the art that the invention is not restricted to the examples described above but that it may be varied within the scope of the claims presented below. Thus, for example, the structure and positions of the components of the fin can be different from what is presented. The float part can, for example, be made of flexible material so that when reducing the gas pressure inside the gas chamber of the float part the float part is pressed downwards by the pressure of water and simultaneously makes the total height of the fin lower.

## Claims

1. Wave energy conversion apparatus to be used in shallow water comprising at least: a base (1) arranged to be anchored to the sea bed; an upstanding fin (2) pivotally connected to said base (1), said fin (2) arranged to oscillate in use back and forth about the vertical in response to wave motion acting on faces of the fin (2), and said fin (2) comprising a float part (2b) being sufficiently buoyant in water tending to assist the fin (2) to vertical; and power-take-off (PTO) means (7) for extracting energy from the motion of the fin (2), and said conversion apparatus is formed and arranged so that the base (1) is anchored to the sea bed with the fin (2) facing the wave motion, the fin (2) comprises a fin body (2c) having a corrugated wall part (2d) that is arranged to face the wave motion, **characterized in that** the upper edge and/or the side edges of the fin (2) are equipped with auxiliary side wings (9, 11) to change the water flow in the vicinity of the edge of the fin (2), and that the auxiliary side wings (9, 11) are arranged to work in pairs one on each side of the edge of the fin (2), and so that on the side of the fin (2) where the water flows towards the fin (2) the side wings (9, 11) turn outwards enlarging the surface area of the fin (2) and on the opposite side of the fin (2) the side wings (9, 11) turn inwards in front of the fin (2).

2. Wave energy conversion apparatus according to claim 1, **characterized in that** the corrugations in wall part (2d) are in the vertical direction.

3. Wave energy conversion apparatus according to claim 1, **characterized in that** the corrugations in wall part (2d) are in the horizontal direction.

4. Wave energy conversion apparatus according to any of the claims above, **characterized in that** the fin (2) is arranged to be equipped with interchangeable upper parts (2a) of different height and form, one upper part (2a) at a time.

5. Wave energy conversion apparatus according to any of the claims above, **characterized in that** the fin (2) comprises an upper part (2a) made of flexible material.

6. Wave energy conversion apparatus according to any of the claims above, **characterized in that** the fin (2) comprises an upper part (2a) made of flexible material and equipped with piezoelectric means and conducting means to generate electric energy when the flexible upper part (2a) bends by the force of the waves, and to conduct the generated electric energy to the fin body (2c) and to other metallic components of the wave energy conversion apparatus to prevent corrosion.

7. Wave energy conversion apparatus according to any of the claims above, **characterized in that** the float part (2b) causing the sufficient buoyant force is situated between the fin body (2c) and the upper part (2a).

8. Wave energy conversion apparatus according to any of the claims above, **characterized in that** the fin (2) comprises one or more auxiliary compartments (2f) in order to adjust the buoyancy of the fin (2) by filling one or more auxiliary compartments (2f) with material heavier than the filling material in the float part (2b), for example with water or sand.

## Patentansprüche

1. Vorrichtung zur Umwandlung von Wellenenergie zur Verwendung in flachem Wasser, umfassend mindestens eine Basis (1), die so angeordnet ist, dass sie am Meeresboden verankert werden kann; eine aufrecht stehende Flosse (2), die schwenkbar mit der Basis (1) verbunden ist, wobei die Flosse (2) so angeordnet ist, dass sie im Gebrauch um die Vertikale hin und her schwingt als Reaktion auf die Wellenbewegung, die auf die Flächen der Flosse (2) einwirkt, und wobei die Flosse (2) einen Schwimmerteil (2b) umfasst, der im Wasser ausreichend schwimmfähig ist und dazu neigt, die Flosse (2) in die Vertikale zu unterstützen; und eine Zapfwelleneinrichtung PTO (7) zum Abziehen von Energie aus der Bewegung der Flosse (2), wobei die Umwandlungsvorrichtung so ausgebildet und angeordnet ist, dass die Basis (1) am Meeresboden verankert ist, wobei die Flosse (2) der Wellenbewegung zugewandt ist, wobei die Flosse (2) einen Flossenkörper (2c) mit einem gekrümmten Wandteil (2d) aufweist, der so angeordnet ist, dass er der Wellenbewegung zugewandt ist, **dadurch gekennzeichnet, dass** die Oberkante und/oder die Seitenkanten der Flosse (2) mit Hilfsseitenflügeln (9, 11) ausgestattet sind, um die Wasserströmung in der Nähe der Kante der Flosse (2) zu verändern, und dass die Hilfsseitenflügel (9, 11) so angeordnet sind, daß sie paarweise auf jeder Seite des Randes der Flosse (2) wirken, und daß auf der Seite der Flosse (2), auf der das Wasser auf die Flosse (2) zuströmt, die Seitenflügel (9, 11) nach außen gerichtet sind und die Oberfläche der Flosse (2) vergrößern, und auf der gegenüberliegenden Seite der Flosse (2) die Seitenflügel (9, 11) vor der Flosse (2) nach innen gerichtet sind.

2. Vorrichtung zur Umwandlung von Wellenenergie nach Anspruch 1, **dadurch gekennzeichnet, dass** die Riffelungen im Wandteil (2d) in vertikaler Richtung verlaufen.

3. Vorrichtung zur Umwandlung von Wellenenergie nach Anspruch 1, **dadurch gekennzeichnet, dass** die Riffelungen im Wandteil (2d) in horizontaler Richtung verlaufen.

4. Vorrichtung zur Umwandlung von Wellenenergie nach einem der vorstehenden Ansprüche, **dadurch gekennzeichnet, dass** die Finne (2) so angeordnet ist, dass sie mit austauschbaren Oberteilen (2a) unterschiedlicher Höhe und Form ausgestattet werden kann, und zwar jeweils ein Oberteil (2a).

5. Vorrichtung zur Umwandlung von Wellenenergie nach einem der vorstehenden Ansprüche, **dadurch gekennzeichnet, dass** die Flosse (2) ein Oberteil (2a) aus flexiblem Material aufweist.

6. Vorrichtung zur Umwandlung von Wellenenergie nach einem der vorstehenden Ansprüche, **dadurch gekennzeichnet, dass** die Flosse (2) einen oberen Teil (2a) umfasst, der aus flexiblem Material besteht und mit piezoelektrischen Mitteln und leitenden Mitteln ausgestattet ist, um elektrische Energie zu erzeugen, wenn sich der flexible obere Teil (2a) durch die Kraft der Wellen biegt, und um die erzeugte elektrische Energie zum Flossenkörper (2c) und zu anderen metallischen Komponenten der Wellenenergieumwandlungsvorrichtung zu leiten, um Korrosion zu verhindern.

7. Vorrichtung zur Umwandlung von Wellenenergie nach einem der vorhergehenden Ansprüche, **dadurch gekennzeichnet, daß** der Schwimmerteil (2b), der die ausreichende Auftriebskraft verursacht, zwischen dem Flossenkörper (2c) und dem oberen Teil (2a) angeordnet ist.

8. Vorrichtung zur Umwandlung von Wellenenergie nach einem der vorhergehenden Ansprüche, **dadurch gekennzeichnet, dass** die Flosse (2) ein oder mehrere Hilfsfächer (2f) aufweist, um den Auftrieb der Flosse (2) durch Füllen eines oder mehrerer Hilfsfächer (2f) mit Material, das schwerer ist als das Füllmaterial im Schwimmerteil (2b), z.B. mit Wasser oder Sand, einzustellen.

## Revendications

1. Appareil de conversion d'énergie houlomotrice à utiliser en eau peu profonde comprenant au moins :
une base (1) agencée pour être ancrée au fond marin ;
une ailette (2) dressée, reliée de manière pivotante à ladite base (1), ladite ailette (2) étant agencée pour osciller d'avant en arrière selon l'axe vertical lors de son utilisation en réponse au mouvement des vagues agissant sur les faces de l'ailette (2), et ladite ailette (2) comprenant une partie flottante (2b) suffisamment flottante dans l'eau tendant à soutenir l'ailette (2) à la verticale ; et
un moyen de prise de force (PTO) (7) destiné à extraire de l'énergie du mouvement de l'ailette (2), et ledit appareil de conversion étant formé et agencé de telle sorte que la base (1) est ancrée au fond marin avec l'ailette (2) face au mouvement des vagues, l'ailette (2) comprenant un corps d'ailette (2c) ayant une partie de paroi (2d) striée qui est disposée de façon à faire face au mouvement des vagues, **caractérisé en ce que** le bord supérieur et/ou les bords latéraux de l'ailette (2) sont équipés d'ailes latérales auxiliaires (9, 11) pour modifier le débit d'eau au voisinage du bord de l'ailette (2), et **en ce que** les ailes latérales (9, 11) auxiliaires sont agencées pour travailler par paires une de chaque côté du bord de l'ailette (2), et de sorte que du côté de l'ailette (2) où l'eau circule vers l'ailette (2), les ailes latérales (9, 11) se tournent vers l'extérieur, agrandissant la surface de l'ailette (2), et du côté opposé de l'ailette (2), les ailes latérales (9, 11) se tournent vers l'intérieur devant l'ailette (2).

2. Appareil de conversion d'énergie houlomotrice selon la revendication 1, **caractérisé en ce que** les stries dans la partie de paroi (2d) sont dans l'axe vertical.

3. Appareil de conversion d'énergie houlomotrice selon la revendication 1, **caractérisé en ce que** les stries dans la partie de paroi (2d) sont dans l'axe horizontal.

4. Appareil de conversion d'énergie houlomotrice selon l'une quelconque des revendications ci-dessus, **caractérisé en ce que** l'ailette (2) est agencée pour être équipée de parties supérieures (2a) interchangeables de hauteur et de forme différentes, une partie supérieure (2a) à la fois.

5. Appareil de conversion d'énergie houlomotrice selon l'une quelconque des revendications ci-dessus, **caractérisé en ce que** l'ailette (2) comprend une partie supérieure (2a) faite d'un matériau flexible.

6. Appareil de conversion d'énergie houlomotrice selon l'une quelconque des revendications ci-dessus, **caractérisé en ce que** l'ailette (2) comprend une partie supérieure (2a) faite d'un matériau flexible et équipée d'un moyen piézoélectrique et d'un moyen conducteur pour générer de l'énergie électrique lorsque la partie supérieure (2a) flexible se plie sous la force des vagues et pour conduire l'énergie électrique générée vers le corps d'ailette (2c) et vers d'autres composants métalliques de l'appareil de conversion d'énergie houlomotrice afin d'empêcher la corrosion.

7. Appareil de conversion d'énergie houlomotrice selon l'une quelconque des revendications ci-dessus, **caractérisé en ce que** la partie flottante (2b) provoquant la force de flottabilité suffisante est située entre le corps d'ailette (2c) et la partie supérieure (2a).

8. Appareil de conversion d'énergie houlomotrice selon l'une quelconque des revendications ci-dessus, **caractérisé en ce que** l'ailette (2) comprend un ou plusieurs compartiments auxiliaires (2f) afin d'ajuster la flottabilité de l'ailette (2) en remplissant un ou plusieurs compartiments auxiliaires (2f) avec un matériau plus lourd que le matériau de remplissage dans la partie flottante (2b), par exemple avec de l'eau ou du sable.
